# EUROPÄISCHE PATENTSCHRIFT

(11) **EP 2 382 042 B1**
(45) Veröffentlichungstag und Bekanntmachung des Hinweises auf die Patenterteilung: **13.08.2014**
(21) Anmeldenummer: 10702427.5
(22) Anmeldetag: 27.01.2010
(51) Int. Cl.: B01J 23/42, B01J 37/02, B01J 37/08, B01D 53/94

(54) **DIESEL-OXIDATIONSKATALYSATOR MIT GUTER TIEFTEMPERATURAKTIVITÄT**
DIESEL OXIDATION CATALYST COMPRISING EXCELLENT LOW TEMPERATURE ACTIVITY
CATALYSEUR D'OXYDATION DIESEL PRÉSENTANT UNE ACTIVITÉ SATISFAISANTE À BASSE TEMPÉRATURE

(30) Priorität: 28.01.2009 DE 102009006404
(43) Veröffentlichungstag der Anmeldung: 02.11.2011
(73) Patentinhaber: Clariant Produkte (Deutschland) GmbH, 65929 Frankfurt am Main (DE)
(72) Erfinder: BENTELE, Andreas, 83043 Bad Aibling (DE); WANNINGER, Klaus, 83059 Kolbermoor (DE); MALETZ, Gerd, 83043 Bad Aibling (DE); SCHNEIDER, Martin, 76327 Pfinztal (DE)
(74) Vertreter: Stolmár & Partner
(86) Internationale Anmeldenummer: PCT/EP2010/000487
(87) Internationale Veröffentlichungsnummer: WO 2010/086149

(56) Entgegenhaltungen:
- EP-A1- 1 356 863
- DE-A1-102007 023 979
- US-A1- 2003 140 620
- US-A1- 2004 082 461
- US-A1- 2008 124 264
- SCHMITZ P J ET AL: "NO oxidation over supported Pt: Impact of precursor, support, loading, and processing conditions evaluated via high throughput experimentation" APPLIED CATALYSIS B: ENVIRONMENTAL, ELSEVIER LNKD- DOI:10.1016/J.APCATB.2006.05.012, Bd. 67, Nr. 3-4, 5. Oktober 2006 (2006-10-05), Seiten 246-256, XP025141760 ISSN: 0926-3373 [gefunden am 2006-10-05]
- MULLA S S ET AL: "NO2 inhibits the catalytic reaction of NO and O2 over Pt" CATALYSIS LETTERS, KLUWER ACADEMIC PUBLISHERS-PLENUM PUBLISHERS, NE, Bd. 100, Nr. 3-4, 1. April 2005 (2005-04-01), Seiten 267-270, XP019275127 ISSN: 1572-879X
- DESPRES J ET AL: "Catalytic oxidation of nitrogen monoxide over Pt/SiO2" APPLIED CATALYSIS B: ENVIRONMENTAL, Bd. 50, Nr. 2, 26. Februar 2004 (2004-02-26), Seiten 73-82, XP002587160
- Anonymous: "Stickstoffoxide" Römpp online März 2002 (2002-03), XP002587161 Gefunden im Internet: URL:http://www.roempp.com/prod/roempp.php [gefunden am 2010-06-08]

## Beschreibung

Die Erfindung betrifft ein Verfahren zur Herstellung eines Katalysators, wobei der Katalysator eine hohe Aktivität und Selektivität bezüglich der Oxidation von CO und NO aufweist. Die Erfindung betrifft ebenso den nach dem erfindungsgemäßen Verfahren hergestellten Katalysator, die Verwendung des Katalysators als Oxidationskatalysator sowie ein Katalysatorbauteil, welches den erfindungsgemäßen Katalysator enthält. Die Erfindung ist letztlich auf ein Abgasreinigungssystem gerichtet, welches das den erfindungsgemäßen Katalysator enthaltende Katalysatorbauteil umfasst.

Zu Beginn der Abgasreinigung von Verbrennungsmotoren wurden nur die Abgase von Benzinmotoren mit Dreiwege-Katalysatoren (TWC) gereinigt. Dabei werden die Stickoxide mit den reduzierenden Kohlenwasserstoffen (HC) und Kohlenmonoxid (CO) reduziert. Hierzu wird der Benzinmotor immer bei ungefähr stöchiometrischen Bedingungen (λ=1) gefahren. Das lässt sich nicht immer genau so gewährleisten, so dass die Bedingungen im Abgas immer um λ=1 schwanken. Das heißt, der Katalysator ist abwechselnd einer oxidativen oder einer reduktiven Gasatmosphäre ausgesetzt.

Seit etwa 15 Jahren versucht man auch die Abgase von Dieselmotoren mit Katalysatoren nachzubehandeln. Das Abgas von Dieselmotoren weist Kohlenmonoxid, unverbrannte Kohlenwasserstoffe, Stickoxide und Rußpartikel als Luftschadstoffe auf. Die unverbrannten Kohlenwasserstoffe umfassen Paraffine, Olefine, Aldehyde und Aromaten. Der Dieselmotor fährt im Gegensatz zum Benzinmotor immer unter Sauerstoffüberschuss. Das hat zur Folge, dass der Katalysator nie reduktiven Bedingungen ausgesetzt ist. Das hat folgende Konsequenzen:
1. Die Sauerstoffspeicherfähigkeit des Katalysatormaterials spielt nicht die Rolle wie beim TWC.
2. Die Edelmetallpartikel werden nicht immer wieder zu Metall der Oxidationsstufe 0 reduziert.
3.Die Stickoxide lassen sich unter Sauerstoffüberschuss mit den im Abgas anwesenden Kohlenwasserstoffen (HC) und dem CO nicht vollständig reduzieren.
4. Die Kohlenwasserstoffe und CO können sowohl mit Sauerstoff als auch mit NOₓ oxidiert werden.

Dieselabgase sind wesentlich kälter als Abgase von Benzinmotoren und enthalten Sauerstoff in einer Konzentration zwischen 3 und 10 Vol.-%, weshalb die katalytische Aktivität des Katalysators im Durchschnitt nicht immer ausreicht und HC und CO zu oxidieren. Im Teillastbetrieb liegt die Abgastemperatur eines Dieselmotors im Bereich zwischen 100 und 250 °C und erreicht nur im Volllastbetrieb eine Maximaltemperatur zwischen 550 und 650 °C. Dagegen liegt die Abgastemperatur eines Benzinmotors im Teillastbetrieb zwischen 400 und 450 °C und kann bei Volllast bis auf 1000 °C ansteigen. Daher ist es ein Ziel, eine möglichst niedrige CO-light-off-Temperatur zu erreichen.

In den vergangenen Jahren wurden zunehmend Dieselpartikelfilter (DPF) im Markt eingeführt. Diese sind in der Regel den DOC-Katalysatoren nachgeschaltet. Im DPF wird Ruß gesammelt und oxidiert. Die Oxidation von Ruß ist mit NO₂ wesentlich besser möglich als mit Sauerstoff. Daher reagiert kontinuierlich umso mehr Ruß ab, je mehr NO₂ im Gasstrom nach dem DOC enthalten ist. Daher war in den vergangenen Jahren die Tendenz möglichst viel NO zu NO₂ im DOC zu oxidieren. Nur ist NO₂ ein noch giftigeres Gas als NO, so dass sich diese Verschiebung in Richtung erhöhter Stickoxid-Imissionen sehr negativ bemerkbar macht. Eine steigende NO₂-Konzentration durch DOC ist in Städten auch schon nachweisbar. Daher geht die Tendenz wieder zu einer Limitierung der NO zu NO₂-Oxidation.

Für die Euro VI-Norm sind daher auch stark verringerte Emissionen an Stickoxiden vorgeschrieben. Diese werden sich entweder nur mittels NOₓ-Speicherkatalysatoren oder mittels einer selektiven katalytischen Reduktion mittels Ammoniak erreichen lassen. Eine solche SCR-Reaktion läuft umso effizienter, je näher das NO/NO₂-Verhältnis bei 1:1 liegt, also ist hierfür eine erhebliche Oxidation von NO zu NO₂ wünschenswert. Diese sollte aber bei weiterhin sehr guter Oxidation von CO und Kohlenwasserstoffen HC erreicht werden.

Die DE 10 2007 023979 A1 beschreibt ein zweistufiges Verfahren zur Reaktivierung thermisch gealterter Stickoxid-Speicherkatalysatoren in Magermotoren, die neben Platin als katalytisch aktiver Komponente basische Verbindungen des Strontiums oder Bariums auf einem Ceroxid enthaltenden Trägermaterial enthalten. Dabei werden während der thermischen Alterung gebildete Strontium- oder Bariumverbindungen durch gezielte Behandlung mit speziellen reduktiven Gasmischungen in die katalytisch aktiven Formen rücküberführt.

Die US 2008/124264 A1 betrifft Katalysatoren zur Reinigung von Abgasen aus Verbrennungsmotoren, wie beispielsweise Dieselmotoren, die schon bei tiefen Temperaturen eine hohe Aktivität für die Oxidation von NO zu NO₂ aufweisen. Als katalytisch aktive Komponenten enthalten diese Katalysatoren sowohl Palladium als auch Platin.

Die US 2003/140620 A1 betrifft ein Reinigungssystem für Dieselabgase, bei dem die Oxidation von NO zu NO₂ bereits bei geringen Temperaturen erfolgt und bei dem das entstehende NO₂ zur Regeneration eines Partikelfilters weiterverwendet wird. Hierfür wird ein Platin-Katalysator auf einem auf einem Zirkonium-/Siliziumoxid-Träger verwendet, der in einem NO/O₂/N₂-Gasgemisch bei 500-650 °C vorbehandelt wird.

Schmitz P. J. et al. haben Einflussfaktoren auf die NO-Oxidationsrate anhand von Pt-geträgerten Al₂O₃- und SiO₂-Systemen untersucht, wobei sowohl Verfahrens- als auch Stoffparameter variiert wurden, und dabei herausgefunden, dass die besten Ergebnisse hinsichtlich niedriger NO-Light-off-Temperaturen und Aktivität bei Katalysatoren erreicht werden, die bei 500 °C in N₂ vorbehandelt wurden.

Mit SCR (selective catalytic reduction) wird die selektive katalytische Reduktion von Stickoxiden aus Abgasen von Verbrennungsmotoren und auch Kraftwerken bezeichnet. Mit einem SCR-Katalysator werden nur die Stickoxide NO und NO₂ (allgemein als NOₓ bezeichnet) selektiv reduziert, wobei für die Reaktion gewöhnlich NH₃ (Ammoniak) zugemischt wird. Als Reaktionsprodukt entstehen daher nur die unbedenklichen Stoffe Wasser und Stickstoff. Für den Einsatz von Kraftfahrzeugen ist das Mitführen von Ammoniak in Druckgasflaschen ein Sicherheitsrisiko. Deshalb werden gewöhnlich Vorläuferverbindungen des Ammoniaks eingesetzt, die im Abgasstrang der Fahrzeuge unter Ammoniakbildung zersetzt werden. Bekannt in diesem Zusammenhang ist beispielsweise die Verwendung von AdBlue^{®}, welches eine etwa 32,5 % eutektische Lösung von Harnstoff in Wasser ist. Andere Ammoniakquellen sind beispielsweise Ammoniumcarbamat, Ammoniumformiat oder Harnstoffpellets.

Vor der eigentlichen SCR-Reaktion muss aus Harnstoff zunächst Ammoniak gebildet werden. Dies geschieht in zwei Reaktionsschritten, die zusammengefasst als Hydrolysereaktion bezeichnet werden. Zunächst werden in einer Thermolysereaktion NH₃ und Isocyansäure gebildet. Anschließend wird in der eigentlichen Hydrolysereaktion Isocyansäure mit Wasser zu Ammoniak und Kohlendioxid umgesetzt.

Zur Vermeidung von festen Ausscheidungen ist es erforderlich, dass die zweite Reaktion durch die Wahl geeigneter Katalysatoren und genügend hoher Temperaturen (ab 250 °C) ausreichend schnell erfolgt. Moderne SCR-Reaktoren übernehmen gleichzeitig die Funktion des Hydrolysekatalysators.

Das durch die Thermohydrolyse entstandene Ammoniak reagiert am SCR-Katalysator nach den folgenden Gleichungen:

4NO + 4NH₃ + O₂ → 4N₂ + 6H₂O (1)

NO + NO₂ + 2NH₃ → 2N₂ + 3H₂O (2)

6NO₂ + 8NH₃ → 7N₂ + 12H₂O (3)

Bei niedrigen Temperaturen (<300 °C) läuft der Umsatz überwiegend über Reaktion (2) ab. Für einen guten Niedertemperaturumsatz ist es deshalb erforderlich, ein NO₂:NO-Verhältnis von etwa 1:1 einzustellen. Unter diesen Umständen kann die Reaktion (2) bereits bei Temperaturen ab 170-200 °C erfolgen.

Die Oxidation von NO zu NOₓ erfolgt erfindungsgemäß in einem vorgelagerten Oxidationskatalysator der für einen optimalen Wirkungsgrad erforderlich ist.

Grundlage der katalytischen Abgasreinigung in einem Dieselmotor ist also offensichtlich der vorgeschaltete Oxidationskatalysator, der eine effiziente Oxidsationswirkung für CO, HC und NO aufweisen soll. Dies gelingt beispielsweise durch die Herabsetzung der CO-light-off-Temperatur.

In der Publikation SAE 2005/01-0476 (Rhodia) wird deutlich, dass vor allem Trägermaterialien mit geringeren Wechselwirkungen mit Pt(II), z.B. Aluminiumoxid und Zirkonoxid, sehr niedrige Light-Off-Temperaturen für die Oxidation von CO ermöglichen. Aufgrund der größeren BET-Oberfläche von Aluminium wird bevorzugt Aluminiumoxid für DOC-Anwendungen eingesetzt.

Einen Weg, die Light-off-Temperatur für CO möglichst weit zu reduzieren, kann man der Patentanmeldung EP 706817 von Umicore entnehmen. EP 706817 beschreibt einen DOC-Katalysator mit Pt auf einem Al/Si-Mischoxid (im besten Fall 5% Si).

Die Weiterentwicklung ist unter Verwendung eines H⁺ und Na⁺-Zeolithen in EP 800856 B1 offenbart, wo bereits Light-off-Temperaturen für CO von ca. 150 °C erreicht werden.

Eine weitere Verbesserung ist in EP 1129764 B1 beschrieben, wo durch eine Kalzinierung durch Eindüsung in eine Flamme sehr fein verteilte Pt-Teilchen mit einer mittleren Oxidationsstufe des Pt < 2,5 entstehen. Dabei ist zu beachten, dass Verbrennungsabgase verschiedenste Komponenten, wie CO, Stickoxide und Restkohlenwasserstoffe enthalten können. Außerdem können Verbrennungsabgase je nach Führung der Verbrennung noch unterschiedliche Mengen Sauerstoff enthalten. Das Gasgemisch kann also reduktiv oder oxidativ sein. Das ist in diesem Fall nicht eindeutig klar.

Das Eindüsen eines Platinprecursors in eine Flamme führt zwar zu einem Katalysator, der eine gute Aktivität bezüglich einer CO-Oxidation aufweist, jedoch lässt sich mit diesem Verfahren die Oxidationsaktivität bezüglich der Oxidation von NO zu NO₂ nicht steuern. Es besteht also nach wie vor ein Bedarf an Katalysatoren mit einer möglichst niedrigen Light-off-Temperatur für CO und gleichzeitig einer hohen Aktivität und Selektivität für die Oxidation von NO zu NO₂.

Die Aufgabe der vorliegenden Erfindung bestand deshalb in der Bereitstellung solcher Katalysatoren.

Die Aufgabe wird gelöst durch ein Verfahren zur Herstellung eines Katalysators, umfassend die Schritte:
(a) Imprägnieren eines Metalloxid-Trägermaterials mit einer Platinverbindung,
(b) Trocknen des imprägnierten Metalloxid-Trägermaterials unterhalb des Zersetzungspunktes der Platinverbindung, wobei ein unkalziniertes imprägniertes Metalloxid-Trägermaterial erhalten wird, und
(c) Kalzinieren des unkalzinierten imprägnierten Metalloxid-Trägermaterials in einem Gasstrom, der aus NO und Inertgas besteht, wobei der Gasstrom 0,5 bis 3 Vol.-% NO und 97 bis 99,5 Vol.-% Inertgas enthält und wobei das Kalzinieren bei einer Temperatur von 400 bis 650 °C erfolgt.

Als Inertgas wird bevorzugt N₂, He, Ne oder Ar eingesetzt, besonders Bevorzugt N₂.

Vorzugsweise enthält der Gasstrom 0,5 bis 3 Vol.-% NO, besonders bevorzugt 1 Vol.-% NO, bezogen auf das Gesamtvolumen des Gasstroms. Entsprechend enthält der Gasstrom vorzugsweise 97 bis 99,5 Vol.-% Inertgas, insbesondere N₂, besonders bevorzugt 99 Vol.-% Inertgas bezogen auf das Gesamtvolumen des Gasstroms.

Überraschenderweise wurde gefunden, dass das Erhitzen eines mit einer Platinverbindung imprägnierten unkalzinierten Trägermaterials in einem Gasstrom der überwiegend Inertgas, insbesondere N₂, und zu geringen Anteilen NO enthält zu einem Katalysator führt, der eine hohe Aktivität für die Oxidation von CO zu CO₂ zeigt, gleichzeitig aber auch eine sehr hohe Aktivität und Selektivität hinsichtlich der Oxidation von NO zu NO₂ aufweist. Dieses Verhalten ist insbesondere für eine Verwendung als Dieseloxidationskatalysator (DOC) mit nachfolgendem SCR (Selective Catalytic Reduction) oder nachfolgendem DPF (Dieselpartikelfilter) und SCR sehr wünschenswert.

Besonders bevorzugt erfolgt in Schritt c) das Kalzinieren (erstes Kalzinieren) des unkalzinierten imprägnierten Trägermaterials innerhalb von 10 Minuten aufheizend, besonders bevorzugt innerhalb von 6 Minuten und ganz besonders bevorzugt innerhalb von 5 Minuten. Die Kalziniertemperatur beträgt bevorzugt 400 °C bis 650 °C, besonders bevorzugt 450 °C bis 600 °C. Im Anschluss erfolgt ein weiteres (zweites) Kalzinieren, gegebenenfalls nach einer kurzen Pause, über einen Zeitraum von 10 - 40 min, bevorzugt 20 min, unter denselben Bedingungen.

Erfindungsgemäß ist es von Vorteil, wenn das getrocknete, imprägnierte Trägermaterial als dünne Schicht bzw. fein verteilt vorliegt, da dann eine optimale Angriffsmöglichkeit für die thermische Energie beim Kalzinieren gewährleistet ist und somit ein vollständiges Kalzinieren während der kurzen Zeitspanne von weniger als 10 Minuten erfolgen kann.

In einer bevorzugten Ausführungsform der Erfindung wird deshalb das getrocknete, imprägnierte Trägermaterial vor dem Kalzinieren auf einen Katalysatorträgerkörper aufgebracht. Besonders bevorzugt wird das getrocknete, imprägnierte Trägermaterial in Form einer Washcoatbeschichtung auf den Katalysatorträgerkörper aufgebracht und danach wiederum unterhalb der Zersetzungstemperatur der Platinverbindung getrocknet.

Das Trocknen des imprägnierten Trägermaterials erfolgt gemäß der vorliegenden Erfindung bevorzugt bei Temperaturen von 60 °C bis 100 °C, mehr bevorzugt von 70 bis 90 °C, am meisten bevorzugt bei 80 °C. Die Temperatur ist jedoch abhängig von der verwendeten Platinverbindung, da diese unterschiedliche Zersetzungspunkte aufweisen können und damit die Temperatur entsprechend angepasst werden muss. Das Trocknen erfolgt bevorzugt unter vermindertem Druck, besonders bevorzugt im Feinvakuum.

Für die Imprägnierung liegt das Edelmetall (Pt) gewöhnlich als Salzlösung vor, beispielsweise als Chlorid, Nitrat oder Sulfat. Es eignen sich gewöhnlich alle gebräuchlichen Salze und Komplexsalze von Platin, z.B. Hexachlorplatinsäure, Tetrachlorplatinsäure, Diamindinitroplatinat(II), Tetraaminplatin(II)chlorid, Ammoniumtetrachloroplatinat(II), Ammoniumhexachloroplatinat(IV), Platinethylendiamindichlorid, Tetraaminplatin(II)nitrat, Tetraaminplatin(II)hydroxid, Methylethanolamin-Platin(II)hydroxid, Platinnitrat, Ethanolammonium-hexahydroxoplatinat (Platinethanolamin, PtEA) und dergleichen.

Als Trägermaterial wird vorzugsweise ein Metalloxid verwendet. Das Metalloxid ist vorzugsweise ausgewählt aus der Gruppe bestehend aus Aluminiumoxid, Siliziumoxid, Alumosilikat, Zirkonoxid, Titanoxid, Al/Si-Mischoxid oder Kombinationen davon.

Die notwendigen Beschichtungstechniken zur Beschichtung eines Katalysatorträgerkörpers sind dem Fachmann bekannt. So wird z.B. das imprägnierte und getrocknete Metalloxid bzw. Mischoxid zu einer wässrigen Beschichtungsdispersion verarbeitet. Dieser Dispersion kann als Binder z.B. Silikasol zugegeben werden. Die Viskosität der Dispersion kann durch die eigenen Zusatzstoffe eingestellt werden, so dass es möglich wird, die benötigte Beschichtungsmenge in einem einzigen Arbeitsgang auf die Wandungen der Strömungskanäle aufzubringen. Ist dies nicht möglich, so kann die Beschichtung mehrfach wiederholt werden, wobei die frisch aufgebrachte Beschichtung jeweils durch eine Zwischentrocknung fixiert wird. Die fertige Beschichtung wird dann bei den oben angegebenen Temperaturen innerhalb des Temperaturbereichs von weniger als 10 min vorzugsweise weniger als 6 min, besonders bevorzugt weniger als 5 min kalziniert (erstes Kalzinieren). Danach erfolgt ein zweiter Kalzinierschritt, gegebenenfalls nach einer kurzen Pause, über einen Zeitraum von 10 - 40 min, bevorzugt 20 min, unter denselben Bedingungen.

Für die Abgasreinigung von Dieselmotoren sind Beschichtungsmengen von 50 bis 500 g/l Volumen des Katalysatorträgerkörpers vorteilhaft. Die Katalysatorkomponente wird dabei vorzugsweise so abgestimmt, dass die katalytisch aktiven Komponenten in dem Metalloxid in einer Konzentration von etwa 0,01 bis 7 g/l, bevorzugt 2 - 4 g/l des Wabenkörpers vorliegen.

Als Katalysatorträgerkörper kann ein metallischer oder keramischer Monolith, ein Vlies- oder ein Metallschaum verwendet werden. Auch andere im Stand der Technik bekannte Katalysatorformkörper bzw. Katalysatorträgerkörper sind erfindungsgemäß geeignet. Besonders bevorzugt ist ein metallischer oder keramischer Monolith, der eine Vielzahl von parallelen Durchtrittsöffnungen aufweist, welche mit der Washcoatbeschichtung versehen werden. Damit kann ein gleichmäßiger und insbesondere dünner Auftrag der Washcoatsuspension sichergestellt werden, was somit die Kalzinierung unterstützt.

Metallische Wabenkörper sind häufig aus Metallblechen oder Metallfolien gebildet. Dabei werden die Wabenkörper beispielsweise durch abwechselnde Anordnung von Lagen strukturierter Bleche bzw. Folien hergestellt. Vorzugsweise bestehen diese Anordnungen dabei aus einer Lage eines glatten Blechs im Wechsel mit einem gewellten Blech, wobei die Wellung beispielsweise sinusförmig, trapezförmig, omegaförmig oder zickzackförmig ausgebildet sein kann. Entsprechende metallische Wabenkörper und Verfahren zu ihrer Herstellung werden beispielsweise in der EP 0 049 489 A1 oder der DE 28 56 030 A1 beschrieben.

Im Bereich der Katalysatorträgerkörper haben metallische Wabenkörper den Vorteil, dass sie sich schneller erwärmen und damit in der Regel Katalysatorträgerkörper auf der Basis von metallischen Substraten ein besseres Ansprechverhalten bei Kaltstartbedingungen zeigen.

Vorzugsweise weist der Wabenkörper eine Zelldichte von 200 bis 600 cpsi, insbesondere 400 cpsi auf.

Der Katalysatorträgerkörper, auf den der erfindungsgemäße Katalysator aufgebracht sein kann, kann aus einem beliebigen Metall oder einer Metalllegierung gebildet und z. B. durch Extrusion oder durch Aufwickeln oder Stapeln oder Falten von Metallfolien hergestellt sein. Bekannt im Bereich der Abgasreinigung sind temperaturbeständige Legierungen mit den Hauptbestandteilen Eisen, Chrom und Aluminium. Bevorzugt für den erfindungsgemäßen Katalysator sind frei durchströmbare monolithische Katalysatorträgerkörper mit oder ohne innere Anströmkanten zur Abgasverwirbelung oder Metallschäume, die eine große innere Oberfläche aufweisen und an denen der erfindungsgemäße Katalysator sehr gut haftet. Jedoch lassen sich auch Katalysatorträgerkörper mit Schlitzen, Lochungen, Perforationen und Prägungen in der Metallfolie einsetzen.

In gleicher Weise können Katalysatorträgerkörper aus keramischem Material eingesetzt werden. Bevorzugt handelt es sich bei dem keramischen Material um ein inertes, niedrig oberflächiges Material wie Cordierit, Mullit oder α-Aluminiumoxid. Jedoch kann der verwendete Katalysatorträger auch aus hochoberflächigem Trägermaterial wie γ-Aluminiumoxid bestehen.

Ebenso kann ein Metallschaum, beispielsweise ein metallisches offenporiges Schaummaterial, als Katalysatorträgerkörper eingesetzt werden. Im Rahmen der vorliegenden Erfindung soll unter dem Begriff "metallisches offenporiges Schaummaterial" ein Schaummaterial aus einem beliebigen Metall oder aus einer beliebigen Legierung verstanden werden, das gegebenenfalls auch noch Zuschlagsstoffe enthalten kann und das eine Vielzahl von Poren aufweist, die miteinander leitungsverbunden sind, so dass beispielsweise durch das Schaummaterial ein Gas hindurchgeleitet werden kann.

Metallische offenporige Schaummaterialien haben durch die Poren und Hohlräume bedingt eine sehr geringe Dichte, weisen jedoch eine beträchtliche Steifigkeit und Festigkeit auf. Die Herstellung von Metallschäumen erfolgt beispielsweise mittels eines Metallpulvers und eines Metallhydrids. Beide Pulver werden in der Regel miteinander vermischt und dann durch Heißpressen oder Strangpressen zu einem Formmaterial verdichtet. Das Formmaterial wird dann auf eine Temperatur oberhalb des Schmelzpunktes der Metalle erhitzt. Dabei setzt das Metallhydrid Wasserstoffgas frei und schäumt das Gemenge auf.

Es gibt jedoch auch noch andere Möglichkeiten, Metallschäume herzustellen, beispielsweise durch Einblasen von Gas in eine Metallschmelze, die zuvor durch Zugabe fester Bestandteile schäumbar gemacht wurde. Für Aluminiumlegierungen beispielsweise werden zur Stabilisierung 10 bis 20 Vol.-% Siliziumcarbid oder Aluminiumoxid zugegeben. Darüber hinaus lassen sich offenporige metallische Schaumstrukturen mit einem Porendurchmesser von 10 ppi bis circa 50 ppi durch spezielle Feingusstechniken herstellen.

Weiterer Gegenstand der Erfindung ist ein Katalysator, welcher nach dem erfindungsgemäßen Verfahren erhältlich ist. Der Katalysator zeichnet sich durch eine sehr gute Aktivität und ein selektives Oxidationspotential für eine Oxidation von CO und NO aus. Auch für HC zeigt der Katalysator sehr gute Umsetzungsraten.

Der Katalysator kann entsprechend als Oxidationskatalysator verwendet werden. Insbesondere soll der Oxidationskatalysator zur selektiven Oxidation von CO und NO eingesetzt werden. Ebenso wird HC sehr gut oxidiert.

Bevorzugt liegt dabei der Katalysator als Beschichtung auf einem Katalysatorträgerkörper, vorzugsweise einem metallischen oder keramischen monolithischem Formkörper, einem Vlies oder einem Metallschaum vor.

Ebenfalls zum Umfang der Erfindung gehört ein Katalysatorbauteil, welches den erfindungsgemäßen Katalysator enthält. Das Katalysatorbauteil ist entsprechend mit einem Gehäuse ausgestattet, in dem sich der Katalysator befindet. Das Gehäuse weist eine Eintritts- und Austrittsöffnung für das zu behandelnde Abgas auf.

Das Katalysatorbauteil kann als Komponente in einem Abgasreinigungssystem verwendet werden. In einer bevorzugten Ausführungsform der Erfindung ist das Katalysatorbauteil einem Dieselpartikelfilter und/oder einem SCR-Katalysator vorgeschaltet. Durch die hohe Aktivität des Katalysators zur Oxidation von NO zu NO₂ wird beispielsweise ein Partikelfilter ausreichend mit NO₂ zur Oxidation von Rußpartikeln versorgt, wobei NO₂ selbst reduziert wird. Nicht benötigtes NO₂ wird bevorzugt in einem nachgeschalteten SCR-Katalysator unter Verwendung von Ammoniak oder einer Ammoniakvorstufe zu unschädlichem Stickstoff umgesetzt.

Gegenstand der Erfindung ist somit auch ein Abgasreinigungssystem umfassend einen erfindungsgemäßen Katalysator und zusätzlich einen Dieselpartikelfilter und/oder einen SCR-Katalysator.

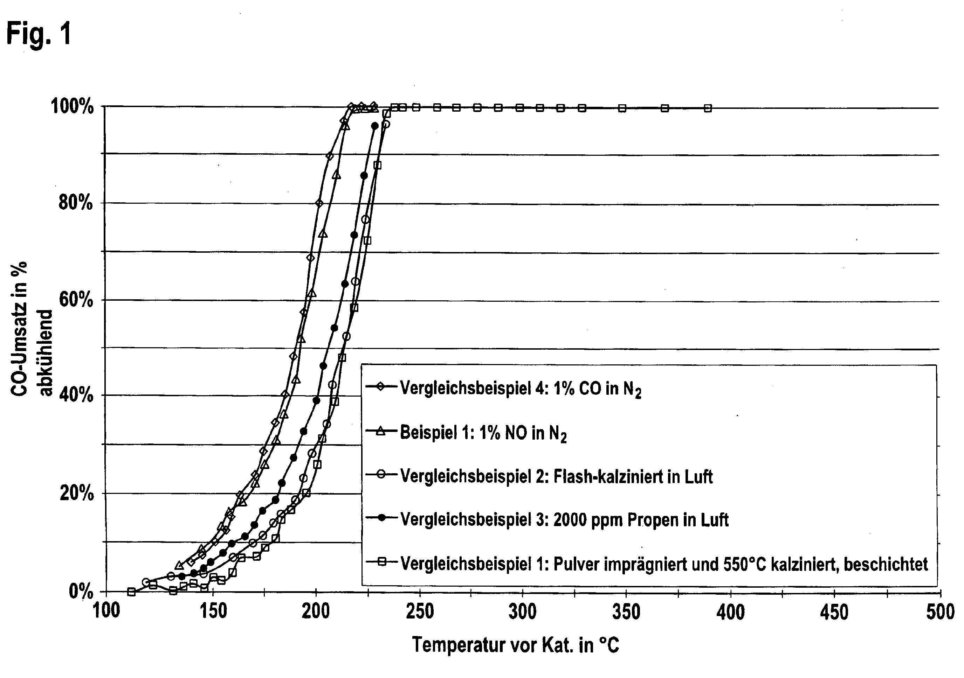

Die Erfindung soll nun anhand einiger Ausführungsbeispiele, welche jedoch nicht als beschränkend auf den Umfang der Erfindung zu verstehen sind, näher erläutert werden. Dabei wird zusätzlich auf die Figuren 1 bis 3 Bezug genommen.

Ausführungsbeispiele:

### Beispiel 1

### 1. Imprägnierung

Zuerst wurde die Wasseraufnahme eines mit Lanthan stabilisierten Aluminiumoxides (Puralox SCF α-140 L3 von Sasol) bestimmt, indem das Pulver gewogen, in Wasser aufgeschlämmt, filtriert und dann nass wieder gewogen wurde. Sie betrug 50,18 Gew.-%.

In einem Planetenmischer wurden zu 300 g des trockenen Puralox-Pulvers unter Rühren langsam 110,4 g einer 13,59 %-igen Lösung von Platinethanolamin (Ethanolammoniumhexahydroxo-platinat) zugetropft. Das Pulver wurde im Vakuumtrockenschrank bei 80 °C für 2 Tage getrocknet, so dass auf einem vollständig trocknen Pulver 5 Gew.-% Platin enthalten wären.

### 2.Washcoatherstellung, Beschichtung:

500 g dieses vakuumgetrockneten Pulvers (aus 2 Imprägnieransätzen) wurden mit 2500 g Wasser aufgefüllt, mit einem Ultra-Turrax-Rührer de-agglomeriert und anschließend mit einer Perlenmühle (4000 U/min, 1,2 mm ZrO₂-Perlen) gemahlen.

Mit diesem Washcoat wurden 400 cpsi-Cordierit Waben durch Eintauchen und Ausblasen beschichtet. Die Waben wurden jeweils danach wieder im Vakuumtrockenschrank bei 80 °C getrocknet.

Da eine Trocknung bei 80 °C im Vakuum so nicht notwendigerweise vollständig erfolgt, wurde zuerst durch mehrfaches Beschichten eine Beladung von 60 g Washcoat/l Wabe hergestellt. Im trockenen Zustand des Aluminiumoxides sollte das einer Platinbeladung von 3,0 g/l entsprechen. Anschließend wurde eine Wabe aus einer Serie gleich beschichteter und nur vakuumgetrockneter Waben bei 500 °C für 3 h kalziniert und der Platingehalt analytisch (Aufschluss und ICP-Analyse) bestimmt. Diese Wabe (Durchmesser 3 cm, Länge 8,8 cm) war beschichtet mit 3,68 g Washcoat und wog 33,4 g. Bei 5 Gew.-% Pt-Gehalt sollte die Wabe also im vollständig trockenen Zustand 0,55 Gew.-% Pt enthalten. Es wurden 0,44 Gew.-% Platin von der Analyse bestimmt, weil das Gewicht von 3,68 g Washcoat nicht ganz trocken war und noch Wasser enthielt.

Aus dem Gewicht der Wabe nach Vakuumtrocknung und dem Gewicht der Wabe nach Kalzinierung und der Platinkonzentration wurde berechnet, wie viel Platin noch auf die Wabe beschichtet werden muss, damit 3,5 g/l Platin auf einer Wabe vorliegen. Aus der Platinmenge, die bereits auf der Wabe war und der Washcoatbeladung nach Vakuumtrocknung konnte berechnet werden, welches Gewicht die nicht vollständig trockenen, bei 80 °C vakuumgetrockneten Waben am Ende haben müssen um 3,5 g Pt/l Wabenvolumen zu haben. Auf dieses Gewicht wurden die Waben dann beschichtet, so dass am Ende jede Wabe einen Platingehalt von 3,5 g/l Wabenvolumen hatte.

### 3. Kalzinierung der Vakuum-getrockneten Waben unter einer Gasmischung welche 1 Vol.-% NO in Stickstoff enthielt.

Die beschichteten Waben wurden unter Verwendung einer Keramikfasermatte zur Abdichtung in ein Quarzglasrohr eingebaut. In der Kalzinieranlage wurde ein Gasgemisch aus 1 Vol.-% NO in Stickstoff über den Katalysator geleitet. Vor dem Quarzglasrohr befand sich ein Erhitzer, der das Gasgemisch sehr schnell auf bis zu 490 °C unmittelbar vor der Wabe erhitzte. Um das Quarzglasrohr befand sich ein IR-Ofen, der die Waben ebenfalls mittels IR-Strahlung schnell aufheizen könnte.

In diesem Aufbau wurde der Gasstrom aus 1 Vol.-% NO in Stickstoff vor der Wabe innerhalb von 50 s von Raumtemperatur auf 450 °C und dann weiter über einen PID-Regler auf 490 °C innerhalb einer weiteren Minute aufgeheizt. Gleichzeitig wurde ein Aufheizen des IR-Ofens mit 100 °C/min auf 600 °C gestartet. Eine Messung mit einem Thermoelement in der Wabe ergab am Ende eine Temperatur von 500 °C in der Wabe. Diese Temperatur wurde nach 6 min erreicht. Unter diesen Bedingungen wurde nach diesen 6 min noch 20 min mit 490 °C Gaseintrittstemperatur und 600 °C IR-Ofentemperatur weiter kalziniert.

### Vergleichsbeispiel 1:

### 1. Imprägnierung:

Zuerst wurde die Wasseraufnahme eines mit Lanthan stabilisierten Aluminiumoxides (Puralox SCF α-140 L3 von Sasol) bestimmt in dem das Pulver gewogen in Wasser aufgeschlämmt, filtriert und dann nass wieder gewogen wurde. Sie betrug 50,18 Gew.-%.

In einem Planetenmischer wurden zu 400 g des trockenen Puralox-Pulvers unter Rühren langsam 144,2 g einer 13,87 %-igen Lösung von Platinethanolamin (Ethanolammouniumhexahydroxoplatinat) zugetropft. Das Pulver wurde dann im Trockenschrank bei 80 °C für 3 Stunden getrocknet. Danach wurde das Pulver in einem Kalzinierofen in Luft 3 h bei 500 °C kalziniert (Aufheizrate 2 °C/min).

### 2.Washcoatherstellung, Beschichtung:

140 g dieses bereits kalzinierten Pulvers wurden mit Wasser auf 700 g aufgefüllt, mit einem Ultra-Turrax-Rührer de-agglomeriert und anschließend mit einer Perlenmühle (4000 U/min, 1,2 mm ZrO₂-Perlen) gemahlen.

Mit diesem Washcoat wurden 400cpsi-Coderierit Waben durch Eintauchen und Ausblasen beschichtet. Die Waben wurden jeweils danach wieder getrocknet und 3 h bei 500 °C kalziniert.

Diese Beschichtung wurde so oft wiederholt, bis eine Beladung von 70 g Washcoat/l Wabe erreicht war. Da das Pulver einen Platingehalt von 5 Gew.-% hatte, bedeutete das, dass die Wabe auch einen Platingehalt von 3,5 g/l hatte.

### Vergleichsbeispiel 2:

1. Eine Wabe imprägniert mit Platinethanolamin und vakuumgetrocknet wurde wie in Beispiel 1 beschrieben hergestellt.
2. Kalzinierung der Vakuum-getrockneten Waben unter Luft.

Die beschichten Waben wurden in ein Quarzglasrohr eingebaut unter Verwendung einer Keramikfasermatte zur Abdichtung.

In der Kalzinieranlage wurde Luft über den Katalysator geleitet.

Vor dem Quarzglasrohr befand sich ein Erhitzer, der die Luft sehr schnell auf bis zu 490 °C unmittelbar vor der Wabe erhitzte. Um das Quarzglasrohr befand sich ein IR-Ofen, der die Waben ebenfalls mittels IR-Strahlung schnell aufheizte.

In diesem Aufbau wurde der Luftstrom vor der Wabe innerhalb von 50 s von Raumtemperatur auf 450 °C und dann weiter über einen PID-Regler auf 490 °C Eintrittstemperatur innerhalb von einer weiteren Minute aufgeheizt. Gleichzeitig wurde ein Aufheizen des IR-Ofens mit 100 °C/min auf 600 °C gestartet. Die Messung mit einem Thermoelement in der Wabe ergab so am Ende eine Temperatur von 500 °C in der Wabe. Diese Temperatur wurde nach 6 min erreicht. Unter diesen Bedingungen wurde nach diesen 6 min noch 20 min mit 490 °C Gaseintrittstemperatur und 600 °C IR-Ofentemperatur weiter kalziniert.

### Vergleichsbeispiel 3:

1. Eine Wabe imprägniert mit Platinethanolamin und vakuumgetrocknet wird wie in Beispiel 1 beschrieben hergestellt.
2. Kalzinierung mit 2000 ppm Propen in Luft:
   Die beschichteten Waben wurden in ein Quarzglasrohr eingebaut unter Verwendung einer Keramikfasermatte zur Abdichtung. Die Kalzinierung der Vakuum-getrockneten Waben erfolgte in einer Kalzinieranlage mit einer Gasmischung von 2000 ppm Propen in Luft durch Überleiten des Gasstroms über den Katalysator.

Vor dem Quarzglasrohr befand sich ein Erhitzer, der das Gasgemisch sehr schnell auf bis zu 490 °C unmittelbar vor der Wabe erhitzte. Um das Quarzglasrohr befand sich ein IR-Ofen, der die Waben ebenfalls mittels IR-Strahlung schnell aufheizte.

In diesem Aufbau wurde der Gasstrom vor der Wabe innerhalb von 50 s von Raumtemperatur auf 450 °C und dann weiter über einen PID-Regler auf 490 °C Eintrittstemperatur innerhalb von einer weiteren Minute aufgeheizt. Gleichzeitig wurde ein Aufheizen des IR-Ofens mit 100 °C/min auf 600 °C gestartet. Die Messung mit einem Thermoelement in der Wabe ergab am Ende eine Temperatur von 500 °C in der Wabe. Diese Temperatur wurde nach 6 min erreicht. Unter diesen Bedingungen wurde nach diesen 6 min noch 20 min mit 490 °C Gaseintrittstemperatur und 600 °C IR-Ofentemperatur weiter kalziniert.

### Vergleichsbeispiel 4:

1. Eine Wabe imprägniert mit Platinethanolamin und vakuumgetrocknet wird hergestellt wie in Beispiel 1 beschrieben.
2. Kalzinierung der Vakuum-getrockneten Waben unter Gasmischung von 1 Vol.-% CO in Stickstoff.

Die beschichteten Waben wurden in ein Quarzglasrohr eingebaut unter Verwendung einer Keramikfasermatte zur Abdichtung. In der Kalzinieranlage wurde ein Gasgemisch aus 1 Vol.-% CO in Stickstoff über den Katalysator geleitet. Vor dem Quarzglasrohr befand sich ein Erhitzer, der das Gasgemisch sehr schnell auf bis zu 490 °C unmittelbar vor der Wabe erhitzte. Um das Quarzglasrohr befand sich ein IR-Ofen, der die Waben ebenfalls mittels IR-Strahlung schnell aufheizte. In diesem Aufbau wurde der Gasstrom vor der Wabe innerhalb von 50 s von Raumtemperatur auf 450 °C und dann weiter über einen PID-Regler auf 490 °C Eintrittstemperatur innerhalb von einer weiteren Minute aufgeheizt. Gleichzeitig wurde ein Aufheizen des IR-Ofens mit 100 °C/min auf 600 °C gestartet. Die Messung mit einem Thermoelement in der Wabe ergab so am Ende eine Temperatur von 550 °C in der Wabe. Diese Temperatur wurde nach 6 min erreicht. Unter diesen Bedingungen wurde nach diesen 6 min noch 20 min mit 490 °C Gaseintrittstemperatur und 600 °C IR-Ofentemperatur weiter kalziniert.

### Beispiel 5:

### Vergleichstest der Katalysatoren:

Die in Beispiel 1 und den Vergleichsbeispielen hergestellten Katalysatorwaben wurden in einem Reaktor unter folgenden Bedingungen auf die Oxidation von CO, Propen und NO getestet.

**Raumgeschwindigkeit: 70.000 h⁻¹**

| | | |
|---|---|---|
| CO: | 500 | ppm |
| NO: | 500 | ppm |
| Propen: | 500 | ppm |
| Sauerstoff: | 5% | |
| Wasser: | 10% | |
| CO₂: | 70-90 | ppm |
| Stickstoff: | Rest | |

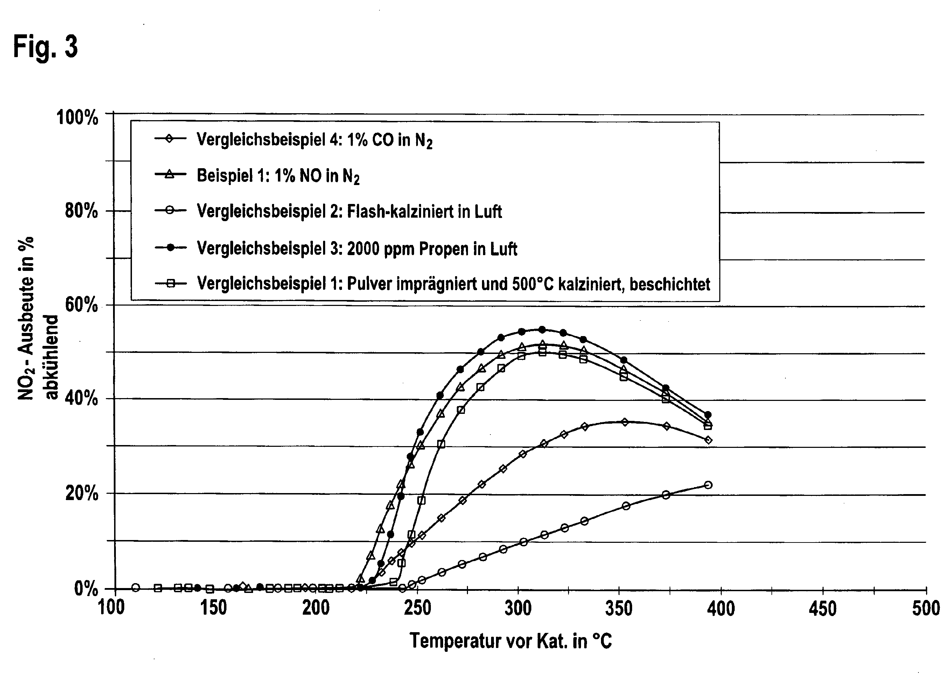

Der Gasstrom wurde vor dem Katalysator aufgeheizt. Für den Test wurde der Katalysator erst 30 min unter diesen Gasbedingungen bei 390 °C betrieben und dann in Schritten von 10 °C abgekühlt. Dabei wurde jede Temperatur 8 min gehalten und die Produktgaszusammensetzung zwischen 7 und 8 min bestimmt. Unterhalb von 250 °C erfolgte die Abkühlung in 5 °C-Schritten um speziell die CO-Light-off-Temperatur (50%-CO-Umsatz) genauer bestimmen zu können.
**Figur 1****:** zeigt den CO-Umsatz der verwendeten Katalysatoren:
   Es ist klar zu erkennen, dass der mit NO in N₂ kalzinierte Katalysator die beste CO-Light-off-Temperatur bei gleichzeitiger sehr hoher NO-Oxidation (siehe Figur 3) aufweist. Der Katalysator, der mit 1 Vol.-% CO in Stickstoff kalziniert wurde, zeigt zwar eine sehr gute Light-off-Temperatur für CO, aber wie in Figur 3 zu erkennen ist, eine geringere Oxidationsaktivität für die Oxidation von NO zu NO₂.

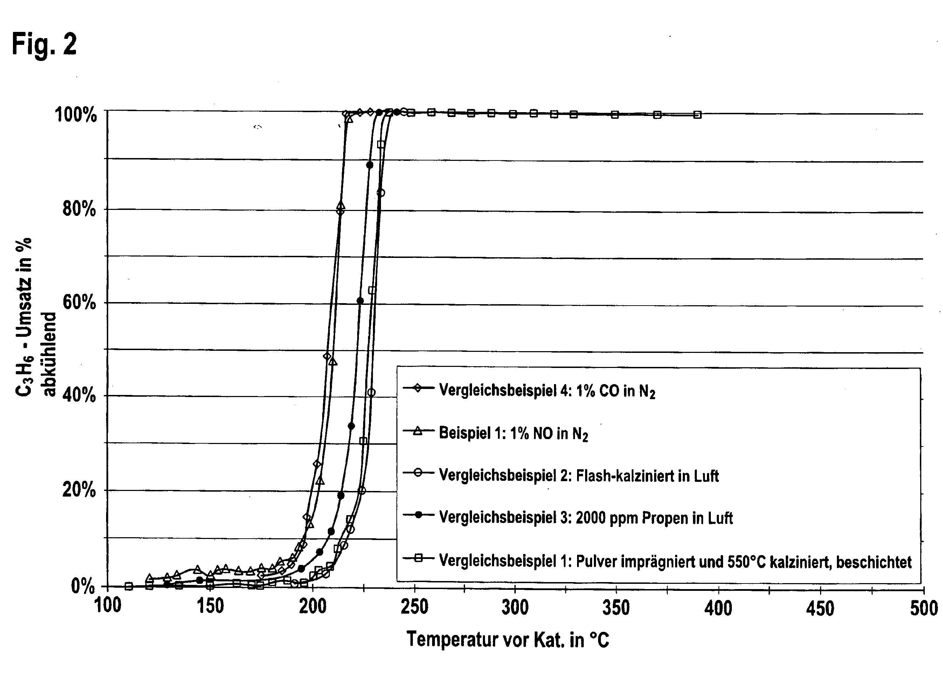

**Figur 2** zeigt den Propen-Umsatz (ein Kohlenwasserstoff, HC) der verwendeten Katalysatoren. Auch hier ist der mit NO in Stickstoff kalzinierte Katalysator sehr gut.
In **Figur 3** ist die Ausbeute für die Oxidation von NO zu NO₂ dargestellt. Es ist klar zu erkennen, dass der Katalysator, der mit CO in Stickstoff kalziniert wurde, nicht nur besser ist für eine Oxidationsreaktion, sondern dass der Katalysator überraschenderweise unter gleichen Bedingungen im gleichen Test sehr viel weniger NO zu NO₂ oxidiert. Dies ist aber bei einer Kalzinierung mit 1 Vol.-% NO in Stickstoff nicht der Fall. Die beste NO-Oxidation liefert zwar der Katalysator, der mit Propen in Luft kalziniert wurde, aber dieser zeigt eine deutlich schlechtere CO-Light-off-Temperatur. Der erfindungsgemäße Katalysator, der mit NO in Stickstoff kalziniert wurde zeigt die beste Kombination aus sehr guter CO-Light-off-Temperatur und einer sehr hohen Aktivität für die Oxidation von NO zu NO₂.

In allen Bereichen ist der mit Propen in Luft kalzinierte Katalysator zumindest besser als die nur an Luft kalzinierten Katalysatoren.

## Patentansprüche

1. Verfahren zur Herstellung eines Katalysators, umfassend die Schritte:
a) Imprägnieren eines Metalloxid-Trägermaterials mit einer Platinverbindung,
b) Trocknen des imprägnierten Metalloxid-Trägermaterials unterhalb des Zersetzungspunktes der Platinverbindung, wobei ein unkalziniertes imprägniertes Metalloxid-Trägermaterial erhalten wird, und
c) Kalzinieren des unkalzinierten imprägnierten Metalloxid-Trägermaterials in einem Gasstrom, der aus NO und Inertgas besteht, wobei der Gasstrom 0,5 bis 3 Vol.-% NO und 97 bis 99,5 Vol.-% Inertgas enthält und wobei das Kalzinieren bei einer Temperatur von 400 bis 650 °C erfolgt.

2. Verfahren gemäß Anspruch 1, wobei in Schritt c) ein erstes Kalzinieren innerhalb von 10 min aufheizend und ein zweites Kalzinieren innerhalb von 10 bis 40 min unter gleichen Bedingungen erfolgt.

3. Verfahren gemäß einem der vorhergehenden Ansprüche, wobei als Inertgas N₂, He, Ne oder Ar eingesetzt wird, bevorzugt N₂.

4. Verfahren gemäß einem der vorhergehenden Ansprüche, wobei das getrocknete, imprägnierte Metalloxid-Trägermaterial vor dem Kalzinieren auf einen Katalysatorträgerkörper aufgebracht wird.

5. Verfahren gemäß Anspruch 4, wobei das getrocknete, imprägnierte Trägermaterial in Form einer WashcoatBeschichtung auf den Katalysatorträgerkörper aufgebracht und danach unterhalb der Zersetzungstemperatur der Platinverbindung getrocknet wird.

6. Verfahren gemäß Anspruch 4 oder 5, wobei als Katalysatorträgerkörper ein metallischer oder keramischer Monolith, ein Vlies oder ein Metallschaum verwendet wird.

7. Verfahren gemäß einem der Ansprüche 1 bis 6, wobei das Metalloxid ausgewählt ist aus der Gruppe bestehend aus Aluminiumoxid, Siliziumoxid, Alumosilikat, Zirkonoxid, Titanoxid, Al-/Si-Mischoxid oder Kombinationen davon.

8. Katalysator, erhältlich nach einem Verfahren gemäß einem der Ansprüche 1 bis 7.

9. Katalysator gemäß Anspruch 8, wobei der Katalysator als Beschichtung auf einem Katalysatorträgerkörper vorliegt.

10. Verwendung des Katalysators gemäß einem der Ansprüche 8 bis 9 als Oxidationskatalysator.

11. Verwendung gemäß Anspruch 10 zur selektiven Oxidation von CO und NO wobei der Katalysator Bestandteil eines Katalysatorbauteils ist.

12. Katalysatorbauteil, enthaltend einen Katalysator gemäß einem der Ansprüche 8 bis 9 oder einen Katalysator hergestellt nach einem Verfahren gemäß einem der Ansprüche 1 bis 7.

13. Abgasreinigungssystem, enthaltend ein Katalysatorbauteil gemäß Anspruch 12.

14. Abgasreinigungssystem gemäß Anspruch 13, wobei das Abgasreinigungssystem einen Dieselpartikelfilter und/oder einen SCR-Katalysator umfasst.

15. Abgasreinigungssystem gemäß Anspruch 14, wobei der Partikelfilter und/oder der SCR-Katalysator dem Katalysatorbauteil gemäß Anspruch 12 nachgeschaltet ist.

## Claims

1. Method for producing a catalyst, comprising the steps:
a) impregnating a metal oxide support material with a platinum compound,
b) drying the impregnated metal oxide support material below the decomposition point of the platinum compound, wherein an uncalcined impregnated metal oxide support material is obtained, and
c) calcining the uncalcined impregnated metal oxide support material in a gas stream which consists of NO and inert gas, wherein the gas stream contains 0.5 to 3 vol.-% NO and 97 to 99.5 vol.-% inert gas and wherein the calcining takes place at a temperature of from 400 to 650°C.

2. Method according to claim 1, wherein in step c) a first calcining takes place heating up within 10 min and a second calcining within from 10 to 40 min under the same conditions.

3. Method according to one of the previous claims, wherein N₂, He, Ne or Ar, preferably N₂, is used as inert gas.

4. Method according to one of the previous claims, wherein the dried, impregnated metal oxide support material is applied to a catalyst support body before the calcining.

5. Method according to claim 4, wherein the dried, impregnated support material is applied to the catalyst support body in the form of a washcoat coating and then dried below the decomposition temperature of the platinum compound.

6. Method according to claim 4 or 5, wherein a metallic or ceramic monolith, a non-woven or a metal foam is used as catalyst support body.

7. Method according to one of claims 1 to 6, wherein the metal oxide is selected from the group consisting of aluminium oxide, silicon oxide, aluminosilicate, zirconium oxide, titanium oxide, Al/Si mixed oxide or combinations thereof.

8. Catalyst that can be obtained using a method according to one of claims 1 to 7.

9. Catalyst according to claim 8, wherein the catalyst is present as coating on a catalyst support body.

10. Use of the catalyst according to one of claims 8 to 9 as oxidation catalyst.

11. Use according to claim 10 for the selective oxidation of CO and NO, wherein the catalyst is a constituent of a catalyst component.

12. Catalyst component containing a catalyst according to one of claims 8 to 9 or a catalyst produced using a method according to one of claims 1 to 7.

13. Exhaust-gas cleaning system containing a catalyst component according to claim 12.

14. Exhaust-gas cleaning system according to claim 13, wherein the exhaust-gas cleaning system comprises a diesel particle filter and/or an SCR catalyst.

15. Exhaust-gas cleaning system according to claim 14, wherein the particle filter and/or the SCR catalyst is fitted downstream of the catalyst component according to claim 12.

## Revendications

1. Procédé de fabrication d'un catalyseur, comprenant les étapes de :
a) imprégnation d'un matériau support en oxyde métallique avec un composé de platine,
b) séchage du matériau support en oxyde métallique imprégné en dessous du point de décomposition du composé de platine, dans lequel un matériau support en oxyde métallique imprégné non calciné est obtenu, et
c) calcination du matériau support en oxyde métallique imprégné non calciné dans un courant gazeux qui se compose de NO et de gaz inerte, dans lequel le courant gazeux contient 0,5 à 3 % en vol. de NO et 97 à 99,5 % en vol. de gaz inerte, et dans lequel la calcination a lieu à une température de 400 à 650°C.

2. Procédé selon la revendication 1, dans lequel une première calcination a lieu à l'étape c) en chauffant en l'espace de 10 min et une seconde calcination a lieu dans les mêmes conditions en l'espace de 10 à 40 min.

3. Procédé selon l'une quelconque des revendications précédentes, dans lequel N₂, He, Ne ou Ar est utilisé comme gaz inerte, de préférence N₂.

4. Procédé selon l'une quelconque des revendications précédentes, dans lequel le matériau support en oxyde métallique imprégné séché est appliqué sur un corps de support de catalyseur avant la calcination.

5. Procédé selon la revendication 4, dans lequel le matériau support imprégné séché est appliqué sous la forme d'un revêtement verso sur le corps de support de catalyseur, puis est séché en dessous de la température de décomposition du composé de platine.

6. Procédé selon la revendication 4 ou 5, dans lequel un monolithe métallique ou céramique, un non tissé ou une mousse métallique est utilisé(e) en tant que corps de support de catalyseur.

7. Procédé selon l'une quelconque des revendications 1 à 6, dans lequel l'oxyde métallique est sélectionné parmi le groupe constitué de l'oxyde d'aluminium, l'oxyde de silicium, l'aluminosilicate, l'oxyde de zirconium, l'oxyde de titane, un oxyde mixte Al-Si ou des combinaisons de ceux-ci.

8. Catalyseur pouvant être obtenu selon un procédé selon l'une quelconque des revendications 1 à 7.

9. Catalyseur selon la revendication 8, dans lequel le catalyseur est présent en tant que revêtement sur un corps de support de catalyseur.

10. Utilisation du catalyseur selon l'une quelconque des revendications 8 à 9 en tant que catalyseur d'oxydation.

11. Utilisation selon la revendication 10 pour l'oxydation sélective de CO et NO, dans laquelle le catalyseur fait partie d'un composant de catalyseur.

12. Composant de catalyseur, contenant un catalyseur selon l'une quelconque des revendications 8 à 9 ou un catalyseur fabriqué selon un procédé selon l'une quelconque des revendications 1 à 7.

13. Système de purification de gaz d'échappement, contenant un composant de catalyseur selon la revendication 12.

14. Système de purification de gaz d'échappement selon la revendication 13, dans lequel le système de purification de gaz d'échappement comprend un filtre à particules diesel et/ou un catalyseur RCS.

15. Système de purification de gaz d'échappement selon la revendication 14, dans lequel le filtre à particules et/ou le catalyseur RCS est monté en aval du composant de catalyseur selon la revendication 12.
